# EUROPEAN PATENT APPLICATION

(11) **EP 4 674 904 A1**
(43) Date of publication of application: **07.01.2026**
(21) Application number: 24186426.3
(22) Date of filing: 04.07.2024
(51) Int. Cl.: C08K 3/016, C08K 3/34, C09J 7/30, C09J 11/08, C09J 133/00

(54) **FLAME RETARDANT ADHESIVE COMPOSITION AND FLAME RETARDANT ADHESIVE TAPE**

(71) Applicant: Lohmann GmbH & Co. KG, 56567 Neuwied (DE)
(72) Inventor: Vincent, Leon, 56068 Koblenz (DE); Theisen, Sophie, 56567 Neuwied (DE); Smit, Evert, 53177 Bonn (DE)

(57) **Abstract**

In order to provide a flame retardant adhesive with improved flame retardant and adhesive properties, a flame retardant adhesive composition is proposed, the flame retardant adhesive composition comprising at least one adhesive and a first flame retardant additive, which is a polyhedral oligomeric silsesquioxane (POSS), further comprising a second flame retardant additive and a third flame retardant additive, wherein a total amount of the flame retardant additives in the flame retardant adhesive is at most 30 wt%.

## Description

The invention relates to a flame retardant adhesive composition and a flame retardant adhesive tape comprising the flame retardant adhesive composition.

Flame retardant properties are required in more and more application fields for adhesive tapes, such as construction, automotive, aerospace and electronics. In particular, there is a desire for more safety in electric vehicles, especially in cases of a battery fire, something that sufficiently flame retardant adhesive tapes could provide.

However, while many different flame retardant materials and additives are known, it is not trivial to include then into existing types of adhesives while still retaining the required adhesion and cohesion. CN 101186799 A discloses a fire resistant anaerobic adhesive containing cage-type silsesquioxane, also known as polyhedral oligomeric silsesquioxane (POSS), as the only flame retardant additive. While this shows that it is possible to incorporate POSS into an adhesive to achieve flame retardant properties, it is further disclosed that the amount of POSS used varies from 10-50 wt%. Ideally, additives which are introduced into an adhesive composition are kept as low as possible while still providing the desired additional effect, because a large amount of additives not only increases the material cost of the adhesive composition, but also negatively affects the adhesive properties.

Finally, in view of possible bans on substances due to their environmental impact and an increase of the value society as a whole puts on sustainability and green technology, there is also a need for adhesive compositions that can offer the required adhesive properties and flame retardant properties while minimizing the amount of substances used which either have a bad carbon footprint and/or a bad environmental impact.

In view of this state of the art, it is an object of the invention to provide a flame retardant adhesive composition and a flame retardant adhesive tape with improvements concerning flame retardant and adhesive properties as well as an environmental impact. This object is achieved by the features of claim 1, while advantageous implementations and embodiments of the invention may be gathered from the dependent claims.

### Description of the Invention

The invention is based on a flame retardant adhesive composition comprising at least one adhesive and a first flame retardant additive, which is a polyhedral oligomeric silsesquioxane (POSS).

It is proposed that the flame retardant adhesive composition comprises a second flame retardant additive and a third flame retardant additive, wherein a total amount of the flame retardant additives in the flame retardant adhesive composition is at most 30 wt%, preferably at most 20 wt% and most preferably at most 10 wt%.

In a further embodiment of the invention, a flame retardant adhesive tape is equipped with an adhesive layer comprising the flame retardant adhesive composition.

This way, a flame retardant adhesive composition as well as a flame retardant adhesive tape with improved flame retardant properties and adhesive properties can be provided. This invention is based on the unexpected discovery that, despite the reasonable assumption that including more types of flame retardant additives would increase the total amount of flame retardant additives needed to achieve the same properties, POSS works as a synergist agent with other types of flame retardant additives, allowing for a reduction in the total amount of flame retardant additives while still providing equal amounts of resilience against heat and flames. This in turn causes a decrease in the influence of the flame retardant additives on the adhesive properties and provides room for other additives, resulting in both better adhesive performance and more customization options. After extensive experimentation, it has been discovered that if the POSS is combined with at least two further types of flame retardant additives, the total amount of flame retardant additives in the flame retardant adhesive can be kept at under 30 wt% or even lower depending on the flame retardant additives chosen, while still being sufficiently resilient to heat and flames for the creation of flame retardant adhesive tapes. Since a lot of different flame retardant additives are known for their bad environmental impact, due to containing halogens for example, reducing the total amount needed as well as using POSS, which has a comparatively good environmental impact, also greatly lessens the total environmental impact of the flame retardant adhesive composition.

Materials and objects that are considered "flame retardant" display at least one retardation mechanism when heated up past a predefined threshold temperature. This retardation mechanism results in either a cooling down of the material or object or a creation of a non-flammable material which provides thermal shielding and/or dilution of combustible gases. Known retardation mechanisms include endothermic degradation, surface charring, thermal degradation into non-flammable gases and thermal degradation into non-flammable halides. Flame retardant additives are substances which are added to a material or object which in itself is not flame retardant in order to create a flame retardant material or flame retardant object. It is important to differentiate between materials which are flame retardant and materials which are non-flammable. Materials which are non-flammable exhibit a flash point of at least 1200°C and are therefore unable to be ignited by orange flames, but do not display any retardation mechanisms. Examples of non-flammable materials can be found among nitrides, ceramics, silica, carbides, glass, minerals, metals, and/or metal oxides. While some flame retardant materials are able to create non-flammable materials as part of their retardation mechanism, they are not required to be non-flammable in their basic state.

An "adhesive" is to be understood as a substance which forms non-covalent, physical bonds, for example hydrogen-bonds, to a surface of an object to be bonded in an applied state. Adhesives comprise monomers, which, depending on a state of the adhesive, may be present in the form of polymers or a polymer network. In this context, a process of linking the monomers to create polymers is to be understood as a polymerization, while a process of linking the polymers to create the polymer network is to be understood as a cross-linking. Both the polymerization and the cross-linking change the viscosity of the adhesive, and depending on a type of adhesive, the same adhesive may be liquid, semi-solid and/or a solid depending on its state. Adhesives which are semi-solid may be coated to form adhesive films. The flame retardant adhesive composition may be a liquid adhesive composition which is liquid in a non-polymerized, non-crosslinked state and solid in a cross-linked state. Preferably, the flame retardant adhesive composition is a film adhesive composition which is liquid in a non-polymerized, non-crosslinked state, semi-solid in a polymerized, non-crosslinked state and solid in a polymerized, crosslinked state.

For example, the adhesive may be an acrylate-based adhesive, a methacrylate-based adhesive, a cyanacrylate-based adhesive, a polyurethane-based adhesive, an epoxide-based adhesive, a silicone-based adhesive, a synthetic-rubber-based adhesive and/or a natural-rubber-based adhesive, or a blend of any of these adhesives. "x-based" in this context is to be understood as the polymers of the adhesive comprising x-monomers or repeated x-subunits.

The flame retardant adhesive composition may comprise the adhesive in a non-polymerized and/or non-crosslinked state. In this case, the adhesive may comprise at least one polymerization agent and/or crosslinking agent. The polymerization agent and/or crosslinking agent may be a functional group of one of the monomers. Alternatively, the polymerization agent and/or crosslinking agent may be added to the monomers as a separate substance. The polymerization and/or crosslinking agent may be configured to initiate the polymerization reaction and/or crosslinking reaction immediately. Alternatively, the polymerization and/or crosslinking agent may be configured to initiate the polymerization reaction and/or crosslinking reaction only after a certain condition is met, such as an initiation temperature for example. Such polymerization and/or crosslinking agents are often provided in form of a meltable granulate or powder.

The flame retardant adhesive composition consists of the adhesive as well as the first, second and third flame retardant additive and, optionally, further additives. Preferably, the first, second and third flame retardant additive are added to the monomers, polymers or polymer network as separate substances. The adhesive may comprise additional flame retardant additives in form of functional groups of the monomers.

Flame retardant additives can be separated into four distinct classes. A flame retardant additive may be a mineral, which commonly display endothermic degradation. Examples of flame retardant additives which are a mineral are aluminium hydroxide, magnesium hydroxide, huntite, hydromagnesite, red phosphorus as well as hydrates and borates. Alternatively, a flame retardant additive may be an organohalogen compound, which commonly display thermal degradation into halides. Examples of flame retardant additives which are organohalogen compounds are organochlorines such as chlorendic acid derivatives and chlorinated paraffins, organobromines such as decabromodiphenyl ether, decabromodiphenyl ethane, polymeric brominated compounds such as brominated polystyrenes, brominated carbonate oligomers, brominated epoxy oligomers, tetrabromophthalic anhydride, tetrabromobisphenol A and hexabromocyclododecane. Alternatively, a flame retardant additive may be an organophosphorous compound, which commonly display surface charring. Examples of flame retardant additives which are organophosphorous compounds are organophosphates such as triphenyl phosphate, resorcinol bis, bisphenol A diphenyl phosphate and tricresil phosphate, phosphonates such as dimethyl methylphosphonate, and phosphinates such as aluminium diethyl phosphinate. Alternatively, a flame retardant additive may be an organic compound. Examples of flame retardant additives which are organic compounds are carboxylic acids and dicarboxylic acids, such as tannic acid.

The POSS is a molecule comprising a cage-structure, preferably cubic-structure, silsesquioxane. The POSS comprises a multitude of corners in its structure which are formed by silicon atoms, preferably, the POSS comprises eight corners. The POSS comprises a multitude of functional substituents, with each of the corners of the silsesquioxane being bound to one of the functional substituents. The functional substituents may comprise acrylics, styrenics, olefins, aromatics, nitriles, carboxylic acid derivatives, organic phosphates, fluorides, chlorides, silanes, silanols, epoxies, alcohols, phenols, thiols, amines, imides, acids, esters, organohalides and/or isocyanates. It is possible that all functional substituents of the POSS are identical, alternatively, they may be any mixture of different functional substituents. In general, the functional substituents of the POSS used in the flame retardant adhesive composition are dependent on the type of adhesive, as the functional substituents determine the compatibility of the POSS with the polymer network of the adhesive, wherein a high compatibility is the key to achieve a sufficient dispersion of the POSS in the flame retardant adhesive.

The flame retardant adhesive tape may be a one-sided adhesive tape or a double-sided adhesive tape. The flame retardant adhesive tape may comprise at least one carrier or be a carrier-less transfer tape. The flame retardant adhesive tape may be provided as part of an adhesive tape roll or as an adhesive sheet. In case of the flame retardant adhesive tape being a double-sided adhesive and comprising a carrier, it comprises at least two adhesive layers, of which any, preferably all, comprise the flame-retardant adhesive composition. The flame retardant adhesive tape may comprise any number of further layers which offer a functionality that differs from the carrier and the adhesive layer. The further layers may for example provide additional flame retardancy, thermal insulation, electrical conductivity, electrical insulation, debonding by cleaving of the further layer, debonding by heating and/or irradiation of the further layer, debonding by dissolution of the further layer and/or shock resistance. Any of the layers of the flame retardant adhesive tape may either be coherent layers or comprise any number of indentations or gaps. For example, any of the layers of the flame retardant adhesive tape may be foamed or perforated.

In a further embodiment of the invention, the flame retardant adhesive comprises:
60 - 99, preferably 70 - 99, most preferably 80 - 99 wt% of the adhesive,
0,01 - 10, preferably 0,1 - 5, most preferably 0,5 - 2 wt% of the first flame retardant additive,
0,01 - 10, preferably 0,1 - 5, most preferably 0,5 - 2 wt% of the second flame retardant additive,
0,01 - 10, preferably 0,1 - 5, most preferably 0,5 - 2 wt% of the third flame retardant additive and
0 - 30, preferably 0 - 20, most preferably 0 - 10 wt% of further additives,
wherein the weight percentages add up to 100 wt%.

Any ranges disclosed herein shall be understood in that the borders of the ranges are included. This flame retardant adhesive composition provides a good compromise between the adhesive properties and the flame retardant properties while also leaving enough room for the addition of further additives, thus allowing an adjustment to requirements of a large variety of applications.

The further additives may comprise additional flame retardant additives, in which case the additional flame retardant additives count towards the total amount of flame retardant additives in the flame retardant adhesive composition. Alternatively or additionally, the further additives may comprise substances configured to influence the physical and/or chemical properties of the flame retardant adhesive composition besides its resistance to flames and heat. Examples of these substances include tackifiers, film formers, dyes, pigments, foaming agents, electrically conductive fillers, electrically insulating fillers, thermally conductive fillers or any other such substances known in the state of the art. The further additives may comprise non-flammable substances. The non-flammable substances may be embodied as fibers and/or particles which are dispersed in the flame retardant adhesive composition.

Choosing the correct flame retardant additive for an adhesive composition is no simple matter. The effectiveness of the flame retardant additive is highly dependent on the interaction of the flame retardant additive with the polymeric material of the adhesive during a pyrolysis. While there are theories about the different interactions between polymers and flame retardant additives during the pyrolysis, the matter is highly complex, which is why, generally, each type of polymer has to be tested with each type of flame retardant additive to determine their compatibility. Therefore, finding an adhesive composition with multiple flame retardant additives that not only synergize with each other but also with the polymer network of the adhesive requires extensive experimentation and careful selection and distribution of the different components.

In a further embodiment of the invention, the adhesive is a pressure-sensitive adhesive. A pressure-sensitive adhesive is to be understood as an adhesive that is tacky at 25°C before and during the application. The pressure-sensitive adhesive is preferably polymerized before the application. The pressure-sensitive adhesive may be tacky in a non-crosslinked state or a partially cross-linked state and lose its tackiness after the application and a finalization of the cross-linking. In this case, the pressure-sensitive adhesive preferably also comprises at least one cross-linking agent. Alternatively, the pressure-sensitive adhesive may be tacky in a fully cross-linked state and require no additional reaction steps before, during or after the application. An adhesive being tacky is to be understood as the adhesive forming the non-covalent physical bonds solely due to pressure and without the need for additional steps such as a heating, an irradiation or a presence of another substance. Preferably, pressure-sensitive adhesives comprise a glass transition temperature of at most -10°C and a total molecular weight of 400.000 - 900.000 g/mol. Any type of pressure-sensitive adhesive may be used, such as for example adhesives comprising styrene block copolymers, synthetic rubber, natural rubber or silicone rubber. Preferably, the pressure-sensitive adhesive comprises at least one acrylate polymer and/or methacrylate polymer. Tests have shown that acrylate-based adhesives show good compatibility between the POSS and the polymer network. Furthermore, pressure-sensitive adhesives are very advantageous for industrial applications such as for example the manufacture of batteries, since there is no need for additional machines such as heaters during the coating and/or lamination of the adhesive.

Pressure-sensitive adhesives require a careful tuning of the polymerization and cross-linking reactions, since the window of viscosity in which the pressure-sensitive adhesive is tacky is rather small. This makes it even harder to add a high amount of additives, since they also affect the viscosity. Hence, most flame retardant adhesive compositions on the market currently are solvent-based systems configured to harden after the application. The solvent allows for a wetting of a surface to be bonded even without tackiness, but results in higher costs and a worse environmental footprint. However, with the unexpected revelation that the mixture of the three flame retardant additives is able to reduce the amounts required, flame retardant pressure-sensitive adhesive compositions are now much easier to realize.

In a further embodiment of the invention, the adhesive is a hotmelt adhesive. A hotmelt adhesive is to be understood as an adhesive exhibiting thermoplastic properties before and during the application. The hotmelt adhesive has a melting point, which is a temperature above which the hotmelt adhesive is soft enough to be processed. Preferably, a viscosity of the hotmelt adhesive above the melting point is at most 10000 MPas, most preferably at most 5000 MPas. The melting point of hotmelt adhesives typically ranges from 30°C up to 260°C. Examples of hotmelt adhesives can be found among ethylene-vinyl acetate-based adhesives, ethylene-acrylate-based adhesives, polyolefin-based adhesives, polybutene-based adhesives, polyamide-based adhesives, polyimide-based adhesives, polyester-based adhesives, polyurethane-based adhesives, styrene-based adhesives, epoxy-based adhesives, silicone-based adhesives and polypyrrole-based adhesives. The hotmelt adhesive may also be a pressure-sensitive adhesive. The hotmelt adhesive may be a non-reactive hotmelt adhesive and not contain any polymerization agents or crosslinking agents. Non-reactive hotmelt adhesives may also be referred to as thermoplastic adhesives. Most non-reactive hotmelt adhesives have the advantage of keeping their thermoplastic properties, meaning they can be melted and solidified any number of times, which allows for an easy debonding. Of course, precautions must be made to prevent an accidental debonding of the non-reactive hotmelt adhesive in case of a fire. Preferably, the hotmelt adhesive is a reactive hotmelt adhesive. Reactive hotmelt adhesives comprise at least one crosslinking agent configured to initiate the crosslinking reaction via heating to a temperature above the melting point, exposure to moisture or irradiation. The crosslinking reaction causes the reactive hotmelt adhesive to lose its thermoplastic properties and prevent any further melting of the hotmelt adhesive. Reactive hotmelt adhesives may also be referred to as thermosetting adhesives. Reactive hotmelt adhesives which react via moisture may be embodied as polyurethane-based adhesives or silicone-based adhesives. Reactive hotmelt adhesives which react via temperature may be epoxy-based adhesives. Reactive hotmelt adhesives which react via irradiation may be acrylate-based adhesives, preferably ethylene-acrylate-based adhesives such as ethylene n-butyl acrylate adhesives, ethylene-acrylic acid adhesives and ethylene-ethyl acetate adhesives. This way, an environmental impact of the flame retardant adhesive composition can be further reduced. Using a hotmelt adhesive foregoes the need for solvents, since the melting and later solidifying of the adhesive replaces the adding and later evaporation of the solvent. Additionally, due to flame retardant pressure-sensitive adhesives being much easier to manufacture with the flame retardant adhesive composition, the synergy between pressure-sensitive adhesives and hotmelt adhesives can be exploited to further simplify manufacturing and therefore lessen the environmental impact. If the adhesive is both a hotmelt adhesive and a pressure-sensitive adhesive, it allows for the adhesive to be stored in barrels. To start manufacturing, the barrels simply need to be heated, which allows for the molten adhesive to be pumped onto a coating line, and after a coating and cooling down, the formed adhesive film is still tacky and can either be laminated immediately or form part of a flame retardant pressure-sensitive adhesive tape.

In a further embodiment of the invention, the adhesive is a UV-curable adhesive. A UV-curable adhesive is to be understood as an adhesive comprising at least one cross-linking agent which initiates the cross-linking reaction upon being irradiated by UV-light. The UV light may comprise UVA light, UVB light and/or UVC light. The UV-curable adhesive may immediately begin to cross-link upon being irradiated and finish the cross-linking within seconds. Preferably, the UV-curable adhesive has a pot time, which is a time in between the irradiation and the start of the cross-linking. The pot time of UV-curable adhesives can range from a few seconds up to half an hour, depending on different factors such as the types of monomers used, an amount of polyol, a type of cross-linking agent among others. Preferably, the UV-curable adhesive loses any tackiness or thermoplastic properties it may have had after the finalization of the cross-linking. The adhesive may be a UV-curable adhesive as well as a pressure-sensitive adhesive and/or hotmelt adhesive. This way, an environmental impact of the flame retardant adhesive composition can be further reduced. Using a UV-curable adhesive also foregoes the need for solvents since the cross-linking reaction increases a viscosity of the adhesive just like the evaporation of the solvent would. Selecting a UV-curable adhesive over a moisture- or heat-curable adhesive has the advantage of preventing an accidental curing of the adhesive, thus making it much more shelf-stable, especially if UVB light or UVC light is required to cure the adhesive, as these types of UV light are not present in sunlight. Thus, an amount of faulty material that has to be discarded can be reduced, resulting in an even lower environmental impact overall.

In a further embodiment of the invention, the adhesive is a UV-curable acrylate-based hotmelt adhesive. This way, the flame retardant adhesive composition does not require any solvents while still providing the easy application or lamination of pressure-sensitive adhesives combined with the easy storage and coating of hotmelt adhesive and the good shelf-stability and strong final adhesive properties of UV-curable adhesives.

In a further embodiment of the invention, the first flame retardant additive is an imide-functionalized POSS or an amide-functionalized POSS. Tests have shown that using either of these two types of POSS results in fast flame extinction due to surface charring without a significant reduction in the adhesive properties, especially when used in conjunction with acrylate-based adhesives, preferably UV-curable acrylate-based hotmelt adhesives. It can be theorized that the functional groups of the imide- or amide-functionalized POSS disintegrate into inert nitrogen gas, slowing down the progress of the pyrolysis, while the rest of the imide groups or amide groups quickly carbonize with the POSS and the polymer network to form char. This way, the flame retardant properties of the flame retardant adhesive composition can be improved without sacrificing its adhesive properties.

The core difference between imides and amides lies within the presence of two acyl groups bound to the nitrogen in imides, compared to the single acyl group bound to the nitrogen in amides. This changes the polarity of the molecule, and therefore its compatibility with other polar systems, such as the polymer network of the adhesive. Hence, the choice of using an amide-functionalized POSS or an imide-functionalized POSS is largely dependent on the adhesive used, as both types provide good flame retardant properties with sufficient synergy with the other components of the flame retardant adhesive composition.

In a further embodiment of the invention, the second flame retardant additive and the third flame retardant additive are halogen-free. The additives being halogen-free is to be understood as them comprising at most trace amounts of organohalogen compounds such as for example chlorendic acid, chlorinated paraffins, organobromines, polymeric brominated compounds or brominated epoxy oligomers. Trace amounts is to be understood as at most 5 wt%, preferably at most 2 wt% compared to the additive as a whole. This way, an environmental impact of the flame retardant adhesive composition can be further lowered by avoiding the creation of toxic or otherwise harmful materials during the degradation mechanism.

In a further embodiment of the invention, the second flame retardant additive is an organophosphorus compound. For example, the second flame retardant additive could comprise organophosphates such as triphenyl phosphate, resorcinol bis(diphenylphosphate), bisphenol A diphenyl phosphate, tricresyl phosphate, phosphonates such as dimethyl methylphosphonate and/or phosphinates such as aluminium diethyl phosphinate. Preferably, the second flame retardant additive is free of halogen-based organophosphorus compound such as tris(2,3-dibromopropyl)phosphate or tris(1,3-dichloro-2-propyl)phosphate. Tests have shown that organophosphorus compounds synergize very well with acrylate-based adhesives, especially UV-curable acrylate-based hotmelt adhesives, to the point that even amounts as little as 1 wt% already show much higher flame retardancy than minerals such as aluminum trihydroxide in amounts of 5 to 10 wt%. When combined with POSS, this effect is amplified even further.

In a further embodiment of the invention, the third flame retardant additive is a hindered amine stabilizer. A hindered amine stabilizer are chemical compounds containing an amine functional group, preferably as part of an aromatic structure. Examples for hindered amine stabilizers include piperidine-based compounds such as tetramethylpiperidine and its derivatives. They are most commonly used as light stabilizers in polymers due to their reaction with free radicals produced by photooxidation of the polymer. However, as the pyrolysis of the polymer network is also an oxidation reaction, hindered amine stabilizers can be used as thermal stabilizers as well. Tests have shown that hindered amine stabilizers not only synergize with POSS, they also complement the flame retardant properties of organophosphorus compounds due to having a different degradation mechanism. It could be theorized that because phosphorous compounds improve surface charring and hindered amine stabilizers slow the degradation reaction, in combination they allow for the surface to be charred before the flames can penetrate deep into the material, thereby minimizing the degradation of the polymer network. Additionally, despite the excellent flame retardant properties provided by organophosphorus compounds, tests have shown that organophosphates especially are sensitive to hydrolysis, which would make the flame retardant adhesive composition unusable for many applications. However, hindered amines are much more resistant to hydrolysis, thus covering the key weakness of the organophosphorus compounds when used in combination. Finally, based on the fact that imide- and amide-functionalized POSS also shows good synergy with organophosphorus compounds, it can be theorized that the polarities of the nitrogen-containing groups and the phosphor-containing groups complement each other well. Therefore, a combination of these three specific types of flame retardant additives provided optimal results in terms of lowering the total amount of flame retardant additive needed to achieve sufficient flame retardancy.

In a further embodiment of the invention, the third flame retardant additive is a nitrogen-functionalized organophosphorus compound. For example, the third flame retardant additive may be a phosphoramidite, a phosphoramidate or a phosphoramide. This way, the compatibility between nitrogen-containing groups and phosphor-containing groups can be exploited even further by combining a second flame retardant additive which is a, preferably nitrogen-free, organophosphorus compound with a third flame retardant additive which is a nitrogen-functionalized organophosphorus compound.

In a further embodiment of the invention, either the second flame retardant additive or the third flame retardant additive is a carboxylic acid or dicarboxylic acid. Preferably, if the second flame retardant additive or the third flame retardant additive is a carboxylic acid or dicarboxylic acid, the respective other flame retardant additive is a hindered amine stabilizer. Tests have shown that a carboxylic acid or dicarboxylic acid also synergized very well with POSS and hindered amine stabilizers, similar to organophosphorus compounds. This strengthens the theory that the combination of surface charring and degradation inhibition is the cause of the synergistic effect, since carboxylic acid and dicarboxylic acid also promote surface charring.

In a further embodiment of the invention, the weight percentage of any one of the flame retardant additives is at most triple, preferably at most double the weight percentage of any other of the flame retardant additives. For example, if the first flame retardant additive is present at 1 wt%, neither the second flame retardant additive nor the third flame retardant additive may be present at more than 3 wt%. Tests have shown that increasing the amounts of any of the flame retardant additives by more than this has only a marginal effect on the flame retardant properties of the flame retardant adhesive composition. It can be theorized that this is due to each of the flame retardant additives supporting each other during the pyrolysis of the polymer network, and there are certain threshold amounts at which the chemical process becomes saturated. Therefore, staying within these ranges allows for optimal flame retardant properties of the flame retardant adhesive composition while keeping the amount of flame retardant additives as low as possible.

In a further embodiment of the invention, the flame retardant adhesive tape comprises a carrier consisting of at least one flammable material, wherein the carrier has a thickness of at most 500 µm, preferably at most 250 µm, most preferably at most 50 µm and the adhesive layer has a thickness of at least twice the thickness of the carrier. Flammable materials in this context are to be understood as materials which lose their structural integrity when exposed to intense heat or fire, for example by melting or igniting. Examples for non-flame retardant materials include plastics such as for example PET, PP, PVC and PE, cellulose such as for example paper and cardboard, textiles such as for example linen and cotton. Since the carrier supports the adhesive layer of the flame retardant adhesive tape, it is vital that in case of a fire, it is not destroyed. However, creating carriers out of non-flammable materials such as metals is expensive and may make the lamination of the adhesive layer onto the carrier difficult. Tests have shown that a sufficiently thick adhesive layer comprising the flame retardant adhesive composition is enough to stop the pyrolysis before it reaches the carrier, foregoing the need for a non-flammable carrier entirely. However, this limits a maximum thickness of the carrier, since a risk of failure of the adhesive layer due to cohesive debonding is proportional to the thickness of the adhesive layer.

### Examples

In the following, examples to show the effect of the invention as well as tests conducted to evaluate their flame retardant and adhesive properties are described. The tests are inspired by, but not identical to, the norms FMVSS 302 and FAR 25.853, which were selected due to the possible application of the invention in the fields of automotives and interiors.

The following flame retardant adhesive compositions were used:

| Component | E1 | E2 | E3 | E4 | E5 | E6 |
|---|---|---|---|---|---|---|
| Adhesive | 100 wt% | 97 wt% | 98 wt% | 95 wt% | 90 wt% | 97 wt% |
| First flame retardant additive | | 1 wt% | 1 wt% | | 1 wt% | 1 wt% |
| Second flame retardant additive | | 1 wt% | 1 wt% | 5 wt% | | 1 wt% |
| Third flame retardant additive | | 1 wt% | | | | 1 wt% |
| Further Additive | | | | | 9 wt% | |

Example E1 is a control composition without any flame retardant additives. Examples E2 and E6 are compositions according to the invention. Examples E3 to E5 are other combinations of flame retardant additives.

The adhesive used in all of the examples is a UV-curable acrylate-based hotmelt adhesive. Alternatively, other adhesives could have been used, such as solvent-based adhesives, non-curable adhesives, permanently pressure-sensitive adhesives, adhesives based on polyurethane, synthetic rubber, natural rubber, silicon rubber and/or epoxides. The first flame retardant used in the examples E2, E3, E5 and E6 is an imide-functionalized POSS. Alternatively, an amide-functionalized POSS could have been used. The second flame retardant additive used in the examples E2, E3, E4 and E5 is an organophosphorus compound. Alternatively, other flame retardant additives such as a carboxylic acid or dicarboxylic acid could have been used. The third flame retardant additive used in example E2 is a hindered amine stabilizer. The third flame retardant additive used in example E6 is a phosphoramidate. Alternatively, other flame retardant additives such as carboxylic acid or dicarboxylic acid could have been used. The further additive used in example E5 is aluminum trihydroxide. Alternatively, any of the examples may comprise a number of further additives which may or may not comprise aluminum trihydroxide.

It should be noted that while any of the compounds can be swapped out by functionally equivalent alternatives, they cannot be simply swapped in while leaving the rest of the composition the same. Every change requires new tests to find a combination of adhesive and additives that show good compatibility with each other. Not only that, but it often requires adjustments to the distribution of the compounds in the composition. And there is always a chance that the desired properties simply cannot be maintained with a different set of compounds used.

In order to perform the tests, the compositions E1 to E6 were coated on a PET film carrier using state of the art coating methods. The PET film used had a thickness of 50 µm. Afterwards, the adhesive films were irradiated with UV light to fully cross-link the adhesive. The cross-linked adhesive films had a thickness of 100 µm.

In a horizontal burning test, rectangular pieces of the samples consisting of the cross-linked adhesive films and the PET films are each placed on a U-shaped steel frame. The rectangular pieces have a size of 6 cm x 25 cm, wherein the steel frames are shaped in a way that three edges of the rectangular pieces are placed on the steel frame, while a central area and a remaining edge of the rectangular pieces are uncovered. The assemblies comprising the steel frames and the rectangular samples are then placed horizontally. In order to simulate a fire, a Bunsen burner is used to heat up the rectangular pieces at the remaining edge. The Bunsen burner is configured so that the flame has a length of 5 cm, and arranged so that only the tip of the flame is in direct contact with the rectangular pieces. After 15 seconds of exposure to the flame, the Bunsen burner is removed. In order for the rectangular pieces to qualify as sufficiently flame retardant, they have to impede an inflammation to the point that flames may travel no more than 5 cm and/or at a speed of no more than 100 mm/min until extinction.

In a vertical burning test, the setup is largely identical to the horizontal burning test, with the exception of the assemblies being placed vertically instead of horizontally.

The results of the examples E1 to E6 in the vertical and horizontal burning tests are as follows:

| Test | E1 | E2 | E3 | E4 | E5 | E6 |
|---|---|---|---|---|---|---|
| Horizontal | Entire sample burned | Immediate extinction | Immediate extinction | Flames travelled 2 cm total | Entire sample burned | Flames travelled 1 cm total |
| Vertical | Entire sample burned | Immediate extinction | Flames travelled 6 cm total | Flame travelled 8 cm total | Entire sample burned | Flame travelled 2 cm total |

As can be seen from the results, flame retardant additives are definitely needed for applications in which the breakout of fires is a possibility, as adhesive films without them will burn very quickly, leading to not only a further spread of the fire, but also a failure of the adhesion and an unwanted disassembly. Furthermore, despite examples E4 and E5 comprising higher amounts of flame retardant additives than examples E2, E3 and E6, they both exhibit worse flame retardant properties. So, neither adding a lot of flame retardant additives, or combining POSS with any other flame retardant additive are, by themselves, enough to achieve sufficient flame retardant properties. However, example E4 shows that, despite a lower amount of flame retardant additives, organophosphorus compounds already imbue much better flame retardant properties than aluminum trihydroxide, pointing towards them being highly compatible with the polymer network of the adhesive.

Example E3 shows that, not only do organophosphorus compounds synergize with the polymer network, they also synergize well with POSS, resulting in better flame retardant properties than either example E4 or E5 despite having a much lower total amount of flame retardant additives. However, it still is not enough to pass both the horizontal and the vertical burning test.

Finally, in the examples E2 and E6, this synergy is fully realized by combining three specific kinds of flame retardant additives in equal amounts, which is enough to not only pass both the horizontal and the vertical burning test, but extinguish the flame almost immediately both times. This shows the potential of exploiting synergistic effects resulting from careful selection of fitting adhesives and flame retardant additives.

## Claims

1. Flame retardant adhesive composition, comprising at least one adhesive and a first flame retardant additive, which is a polyhedral oligomeric silsesquioxane (POSS), further comprising a second flame retardant additive and a third flame retardant additive, wherein a total amount of the flame retardant additives in the flame retardant adhesive composition is at most 30 wt%.

2. Flame retardant adhesive composition according to claim 1, comprising:
60 - 99 wt% of the adhesive,
0,01 - 10 wt% of the first flame retardant additive,
0,01 - 10 wt% of the second flame retardant additive,
0,01 - 10 wt% of the third flame retardant additive and
0 - 30 wt% of further additives,
wherein the weight percentages add up to 100 wt%.

3. Flame retardant adhesive composition according to claim 1 or 2, wherein the adhesive is a pressure-sensitive adhesive.

4. Flame retardant adhesive composition according to any of the preceding claims, wherein the adhesive is a hotmelt adhesive.

5. Flame retardant adhesive composition according to any of the preceding claims, wherein the adhesive is a UV-curable adhesive.

6. Flame retardant adhesive composition according to claims 4 and 5, wherein the adhesive is a UV-curable acrylate-based hotmelt adhesive.

7. Flame retardant adhesive composition according to any of the preceding claims, wherein the first flame retardant additive is an imide-functionalized POSS or an amide-functionalized POSS.

8. Flame retardant adhesive composition according to any of the preceding claims, wherein the second flame retardant additive and the third flame retardant additive are halogen-free.

9. Flame retardant adhesive composition according to any of the preceding claims, wherein the second flame retardant additive is an organophosphorus compound.

10. Flame retardant adhesive composition according to any of the preceding claims, wherein the third flame retardant additive is a hindered amine stabilizer.

11. Flame retardant adhesive composition according to any of the claims 1 to 10, wherein the third flame retardant additive is a nitrogen-functionalized organophosphorus compound.

12. Flame retardant adhesive composition according to any of the preceding claims, wherein either the second flame retardant additive or the third flame retardant additive is a carboxylic acid or dicarboxylic acid.

13. Flame retardant adhesive composition according to any of the preceding claims, wherein the weight percentage of any one of the flame retardant additives is at most triple the weight percentage of any other of the flame retardant additives.

14. Flame retardant adhesive tape with at least one adhesive layer comprising the flame retardant adhesive composition according to any of the preceding claims.

15. Flame retardant adhesive tape according to claim 14, comprising a carrier consisting of at least one flammable material, wherein the carrier has a thickness of at most 500 µm and the adhesive layer has a thickness of at least twice the thickness of the carrier.

## Amended claims

### Amended claims in accordance with Rule 137(2) EPC.

1. Flame retardant adhesive composition, comprising at least one adhesive and a first flame retardant additive, which is a polyhedral oligomeric silsesquioxane (POSS), further comprising a second flame retardant additive, which is an organophosphorus compound, a carboxylic acid or a dicarboxylic acid, and a third flame retardant additive, which is a hindered amine stabilizer, a nitrogen-functionalized organophosphorus compound, a carboxylic acid or a dicarboxylic acid, wherein a total amount of the flame retardant additives in the flame retardant adhesive composition is at most 30 wt%.

2. Flame retardant adhesive composition according to claim 1, comprising:
60 - 99 wt% of the adhesive,
0,01 - 10 wt% of the first flame retardant additive,
0,01 - 10 wt% of the second flame retardant additive,
0,01 - 10 wt% of the third flame retardant additive and
0 - 30 wt% of further additives,
wherein the weight percentages add up to 100 wt%.

3. Flame retardant adhesive composition according to claim 1 or 2, wherein the adhesive is a pressure-sensitive adhesive.

4. Flame retardant adhesive composition according to any of the preceding claims, wherein the adhesive is a hotmelt adhesive.

5. Flame retardant adhesive composition according to any of the preceding claims, wherein the adhesive is a UV-curable adhesive.

6. Flame retardant adhesive composition according to claims 4 and 5, wherein the adhesive is a UV-curable acrylate-based hotmelt adhesive.

7. Flame retardant adhesive composition according to any of the preceding claims, wherein the first flame retardant additive is an imide-functionalized POSS or an amide-functionalized POSS.

8. Flame retardant adhesive composition according to any of the preceding claims, wherein the second flame retardant additive and the third flame retardant additive are halogen-free.

9. Flame retardant adhesive composition according to any of the preceding claims, wherein the weight percentage of any one of the flame retardant additives is at most triple the weight percentage of any other of the flame retardant additives.

10. Flame retardant adhesive tape with at least one adhesive layer comprising the flame retardant adhesive composition according to any of the preceding claims.

11. Flame retardant adhesive tape according to claim 10, comprising a carrier consisting of at least one flammable material, wherein the carrier has a thickness of at most 500 µm and the adhesive layer has a thickness of at least twice the thickness of the carrier.
